# EUROPEAN PATENT SPECIFICATION

(11) **EP 1 396 813 B1**
(45) Date of publication and mention of the grant of the patent: **08.04.2009**
(21) Application number: 02020134.9
(22) Date of filing: 09.09.2002
(51) Int. Cl.: G06F 3/039, G06K 11/00

(54) **User inputs on a touch screen**
Benutzereingaben auf einem berührungsempfindlichen Bildschirm
Entrées d'utilisateur sur un écran tactile

(43) Date of publication of application: 10.03.2004
(73) Proprietor: Sony Ericsson Mobile Communications AB, 221 88 Lund (SE)
(72) Inventor: Lutnaes, Sturla, 756 43 Uppsala (SE)
(74) Representative: Dahnér, Christer

(56) References cited:
- WO-A-01/95050
- US-A- 5 982 355

## Description

### TECHNICAL FIELD OF THE INVENTION

The present invention relates to the field of portable electronic devices having touch screens on which information can be input. More particularly the present invention relates to a movement input device and a portable electronic device having a touch screen and including such a movement input device, where movement inputs are detected on the touch screen.

### DESCRIPTION OF RELATED ART

It is known within the field of portable electronic devices to provide these with touch screens. For instance Ericsson has a mobile phone model R380, which has a touch screen and a flip provided with keys that go through the flip and touch the touch screen for entering numbers and selecting functions. The mobile phones of today are getting more and more advanced and also often have different applications like games provided in them. In the future it might also be possible to download applications into them. When a user of a phone is playing such games, he will often feel a need for a user input device that can provide movement information, for example for positioning, in an way that is free at least regarding angle around an axis of the device.

There exist several such devices today, for instance joysticks or game pads for providing such movement input to computers and game machines.

Today there does however not exist such a movement input device for portable electronic devices having touch screens, which are cheap and can be used easily. Such a device can be provided directly on a touch screen, but then it is limited to arrow buttons. Arrow buttons on a touch screen do not give the user a good enough control of a game to be played. Today the space on portable electronic devices is furthermore limited, why extra devices and input devices on them have to be considered carefully before being added to the ones already existing.

There exist a joystick that can be fitted on a phone for playing games. This device exists for a number of Nokia mobile phone models and uses the buttons provided on the phone for providing four-way movement with four of the original phone buttons. This is however a "digital" type of movement and will not give a user the best way of performing movement in a game. This is no real improvement to providing arrow buttons directly on the touch screen, but rather replaces it. A user is thus here limited to movement in four directions decided by the underlying keys.

US 5,982,355 describes a joystick that is provided on a touch screen of a remote control. However here the movement of the joystick is sensed by different type of sensors like Hall effect sensors or strain gauge sensors. This is thus equivalent to providing a separate user motion input device.

Document EP 0743590 A2 presents a digitizer with function selection means to be used in association with a stationary computer system e.g. for a CAD system.

There is thus still a need for a simple and cheap movement input device to be used in conjunction with a touch screen and which can receive user inputs that at least correspond to the user movement of the device in an angle around an axis provided generally perpendicular to the touch screen.

### SUMMARY OF THE INVENTION

The present invention is thus directed towards the problem of providing fine detection of user movements with a movement input device in relation to a touch screen.

Another problem that the invention is directed towards is the problem of providing full detection of at least the angle of rotation around an axis by a movement input device provided for a touch screen.

One object of the present invention is thus to provide a movement input device, which provides fine detection of user movements with a movement input device in relation to a touch screen.

According to a first aspect of the invention this object is achieved and this problem is solved by a movement input device for use on a touch screen of a portable electronic device comprising: a fastening unit for securing the movement input device on the portable electronic device and having a top and bottom side, said unit also being arranged for being placed over at least parts of the touch screen, and a user input unit fastened in and stretching through the fastening unit. The user input unit comprises: a user actuation part protruding from the top side of the fastening unit and being possible to actuate by a user for free angular movement with an angle of rotation around an axis provided at least generally perpendicular to the top and bottom sides of the fastening unit, and a touch screen contact part protruding from the bottom side of the fastening unit, which, when the device is placed for use on the touch screen and upon actuation by the user of the user actuation part, is arranged to contact the touch screen in a position where at least an angle of the contact position corresponds to the angle of the user actuation part, so that movement of the user input unit is detected on the touch screen, wherein the user actuation part and the touch screen contact part furthermore are joined together by a fastening part being fastened in the fastening unit while still allowing free movement round said axis.

Another problem that the present invention solves is the provision of "analog" detection of radial movement of the movement input device.

A further aspect of the present invention solves this problem. This aspect of the invention includes the features of the first aspect, wherein the touch screen contact part furthermore comprises a pin for direct contact on the screen so that a radial movement of the touch screen contact part from the axis corresponds to the radial movement of the user actuation part.

A further aspect of the invention includes the features of the previous aspect, wherein the touch screen contact part also comprises a spring arranged to force the pin in contact with the touch screen.

Another aspect of the invention includes the features of the first aspect, wherein the touch screen contact part further comprises a disc having a rim, which contacts the screen at a fixed distance from the axis of the screen upon actuation of the user actuation part.

A further aspect of the present invention includes the features of the previous aspect, wherein the disc has parabolic shape.

Another object of the present invention is to provide a portable electronic device, which provides fine detection of user movements using a movement input device together with a touch screen.

This object is achieved by devices as defined by claims 6-10.

The invention has the following advantages. It does not take up any extra space on the phone. It also uses the touch screen display, which is already provided on the phone. Since the movement input device only includes mechanical components, it is cheap and easy to manufacture. It also allows good position sensing, which is an advantage in some applications, like for instance games.

According to a preferred embodiment of the invention both angular and radial movement of a movement input device are detectable in an "analog" fashion.

According to a second embodiment of the invention only the angular movement of a movement input device is detectable in "analog" fashion. The radial movement is here detected in "digital" fashion.

It should be emphasized that the term "comprises/comprising" when used in this specification is taken to specify the presence of stated features, integers, steps or components, but does not preclude the presence or addition of one or more other features, integers, steps, components or groups thereof.

### BRIEF DESCRIPTION OF THE DRAWINGS

The present invention will now be described in more detail in relation to the enclosed drawings, in which:
fig. 1 shows a portable electronic device in the form of a mobile phone having a touch screen,
fig. 2 shows the portable electronic device on which a movement input device according to the invention is provided,
fig. 3 shows the movement input device according to the invention by itself,
fig. 4 shows a sectional view of a movement input device according to a first embodiment of the invention as well as relevant parts of the portable electronic device,
fig. 5 shows a sectional view of a movement input device according to a second embodiment of the invention as well as relevant parts of the portable electronic device,
fig. 6 shows a block schematic of the interior parts of the phone used when using an application,
fig. 7 shows a first variation of a user actuation part according to the invention, and
fig. 8 shows a second variation of a user actuation part according to the invention.

### DETAILED DESCRIPTION OF EMBODIMENTS

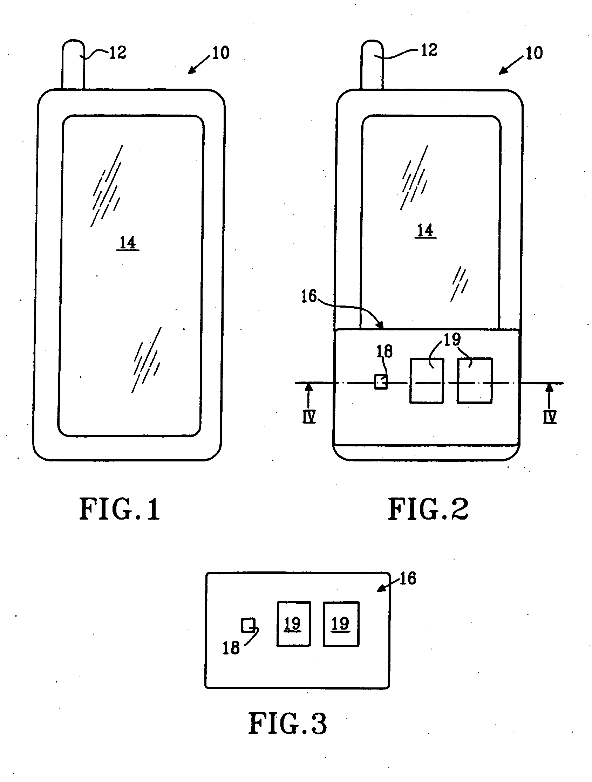

A portable electronic device 10 according to the invention is shown in fig. 1. In the preferred embodiment the device is a mobile phone 10 having an antenna 12 and a display 14. It should be realised that the portable electronic device need not be a phone, but can be any other type of portable electronic device, like a PDA (personal digital assistant), a palm top computer, a lap top computer or some type of gaming machine for playing games. The screen 14 is here a touch screen onto which it is possible to enter information directly onto the screen such as selection of functions or applications and controlling these functions and applications.

In the phones of today there are emerging more and more applications for instance in the form of games that can be played. These games can be provided in the phone beforehand, be downloaded into the phone from a network or added to the phone in some other suitable way. These applications can often need a joystick or some other type of input device that provides movement input. It is hard to provide such devices directly on the screen and a user furthermore often prefers to hold the joystick in his hand when for instance playing games. In order to solve this, the phone shown in fig. 1 is provided with a movement input device according to the invention. The combined phone and movement input device are shown in fig. 2. The movement input device includes a fastening unit in the form of a lid 16 provided with a user input unit in the form of a joystick 18. The movement input device may also include gaming buttons 19. The joystick 18 and buttons are used in conjunction with the touch screen 14 of the underlying phone 10. The lid covers at least parts of the touch screen.

The fastening unit can be provided in many ways. It can be a flip, which is securely fastened onto the body of the phone and rotatable around the bottom end of the phone. It can be a sliding body, which slides up and down along the length of the phone. It can also be a lid, which is snapped on, either with hinges for rotation around the body or without. It can also be provided in the form a sleeve to the phone. It can furthermore be provided in the form of a thin plate, which engages the sides of the phone in order to stay placed over the touch screen and only has enough space for retaining a user input unit. There are thus a number of ways in which the device can be fastened to and be made to cooperate with the phone. In order to demonstrate that the movement input device can be separate from the phone it is shown by itself in fig. 3. The movement input device can furthermore include more or fewer buttons than what is shown. It can for example also include keys that are to be used for telephony and also be provided without the gaming buttons 19. In its simplest form it is thus provided with only a joystick or some other type of user input unit.

The movement input device can be a part sold together with the phone or a part provided as an extra accessory and sold separately, for instance from a game provider.

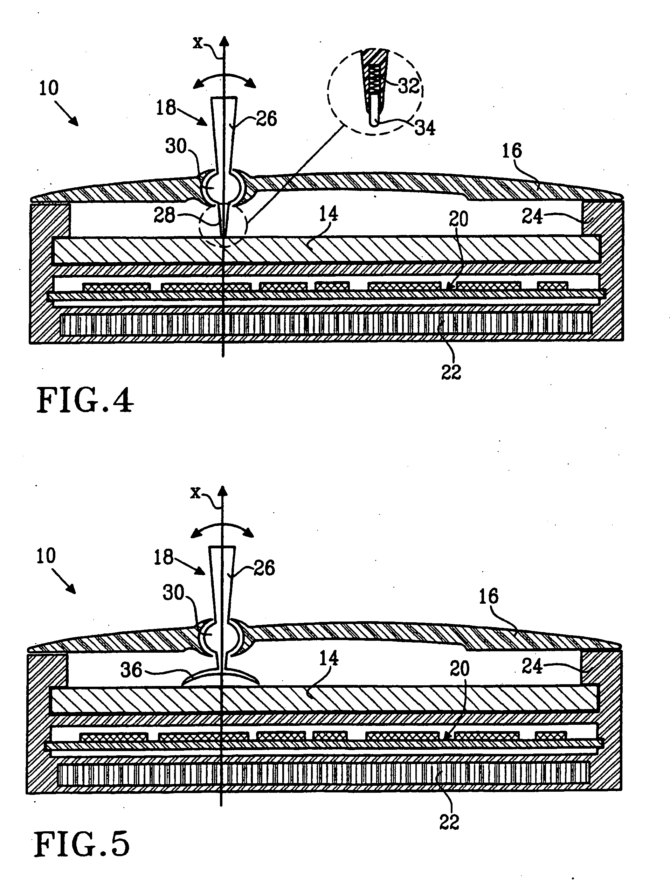

Fig. 4 shows a sectional view of a first preferred embodiment of the movement input device according to the invention together with different parts of the cellular phone 10, where the section has been taken along line IV - IV of fig. 2. The gaming buttons have here been omitted for better understanding of the invention. These do however contact the touch screen in a known way, when being depressed. The user input unit 18 is in constant contact with the touch screen 14 via the lid 16. The touch screen 14 is provided in a body 24 of the phone, which also comprises a PCB (printed circuit board) 20 including a number of circuits as well as a battery 22. The user input unit 18 includes a user actuation part 26 in the form of a stick functioning as a joystick, joined to a touch screen contact part 28 via a ball shaped fastening part 30. The lid has a top side from which the user actuation part 26 protrudes and a bottom side from which the touch screen contact part 28 protrudes. The fastening part 30 is placed in a compartment inside the lid 16 formed after the shape of the fastening part. It should be realised that this is just one way of providing fastening of the user input unit in the lid. There are many other ways in which this can be done. What is important though is that the user input unit is securely fastened in the lid while allowing free movement in relation to an axis at least generally perpendicular to the lid and to the touch screen 16 when the lid is placed thereover. The axis is denoted with X and is shown going straight through the middle of the user input unit, when a user does not actuate this unit. The axis is thus also generally perpendicular to the top and bottom sides of the lid.

The touch screen contact part 28 is shown in an enlargement close to the device. From this enlargement it can be seen that the touch screen contact part 28 includes a pin 34 fastened to the rest of the user input unit via a spring 32. The spring is dimensioned so that enough pressure is provided for receiving movement information while at the same time avoiding damage to the touch screen. The device can function without the spring, but then unwanted damages on the touch screen might occur. The pin 34 also has a blunted top in order not to unnecessarily scratch the surface of the touch screen 14. With this user input unit, the user actuation part 26 can be moved freely all the way round the axis X. Different sizes of radial movement are also possible to obtain. Because of the pin 34 the touch screen then can detect the whole angular movement round the axis X made by a user and also the complete radial movement that is possible to be made by a user. The screen thus detects a corresponding angle and radial movement. There is a slight difference between actuated and detected angle in that the detected angle is opposite to the angle moved by the user. This is easily handled by the application in question or by a separate movement translator provided in the phone. All angular movements and also all allowed radial movements are thus detected. The device is thus "analog" in nature.

It is possible to provide a direct angular correspondence between the user actuation part and touch screen contact part in a variation of the above-described embodiment. This is done by using a pair of meshing gears provided between the user actuation part and the touch screen contact part. This is however a somewhat ineffective and expensive method.

Fig. 5 shows a sectional view of a second embodiment of the movement input device according to the invention. Here the parts of the phone are the same as shown in fig. 4 and the user actuation part is also the same as before, why these will not be described further. The difference here is that the touch screen contact part has another shape. The touch screen contact part 36 is here provided in the form of a parabolically shaped disc facing the touch screen. In the unused state this disc is not in contact with the touch screen 14. When the user actuation part 26 is moved, a point of the rim of the disc will get in contact with the touch screen 14, which point is then detected to be used by the application. With this touch screen contact part 36 free movement around the axis is also allowed. All angular movements are thus detected. The angular movement is thus analog in nature. The radial movement is however always of the same magnitude. The radial movement is thus "digital" in nature. This device does not need a spring and here there does not have to be a translation of the angle either.

The disc can be varied in many ways. It does not have to be parabolic, although this is preferred. It can also be provided by a disc having a number of sides for instance 32 or 64 sides, each curved though. The position will then not be as exactly indicated as with a parabolic disc. It is also possible to have a plane round disc instead

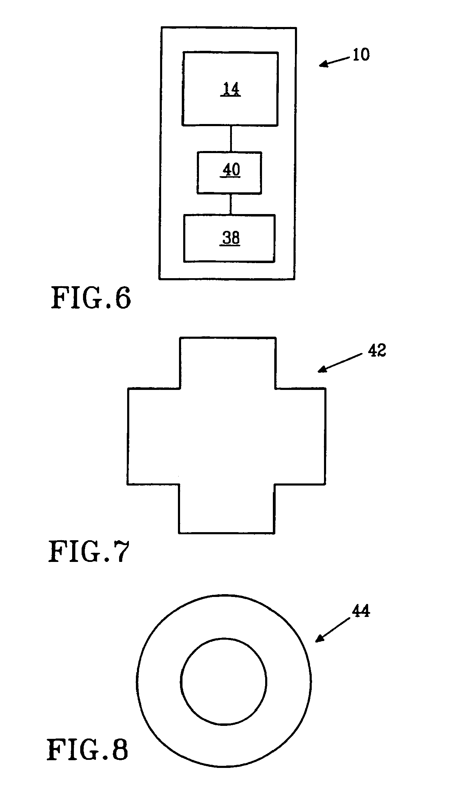

Fig. 6 shows a block schematic of some of the parts of the phone in fig. 1. The touch screen 14 is connected to an input determination unit 40, which in turn is connected to an application unit 38 on which an application is run and preferably a game. The input determination unit 40 determines type of input by a user on the touch screen. This input determination unit determines if the input is a movement input or another type of input. If it is a movement input it calculates rotated angle, possible radial movement and possible angle translations. Here the area of the touch screen where the user input unit can be in contact has been defined as an application user area. When using the movement input device together with an application like a game, parts of the display, normally the part not covered by the lid, is used for displaying the game and the other part covered by the lid is provided as an input portion. The gaming buttons 19 can here also be used for additional functions than movement, and would then also act on the touch screen in a known way.

Fig. 7 shows a variation of the user actuation part. In the previously described embodiments it was a stick. It can however also be a cross shaped thumb plate 42 as in fig. 7 or a thumb plate 44 of circular shape as in fig. 8. The plate can also have four corners or eight corners. There are thus a number of possible shapes.

When using the movement input device according to the invention there might be other variations provided in the phone. The phone might accept several different lids, where one is used for games and another for phoning etc. In this case the phone might be provided with a sensor in the body sensing that there is a lid present and in case of a lid automatically associating the part of the touch screen to be used for movement input. This can be complemented by another sensor sensing what type of lid it is and automatically changing type of input detection based on this extra sensor, i.e. if there is to be a detection of normal push buttons or a user input unit according to the invention. Alternatively a user can set the display area for sensing input movements either by selection in a menu or by selection when entering the application.

The input determination unit described earlier can as an alternative be provided as a part of the application unit or be part of some other general unit. The input determination unit and the application unit are furthermore normally provided in the form of one or more processors with associated program memory or memories storing program code for performing the functions of the units.

It is also possible to implement more than one user input unit in a movement input device, but then the portable electronic device would need more touch screens, one for each input unit. Another variation is to use a touch screen technology, where it is possible to detect multiple points of contact at the same time.

With the present invention there has been provided a movement input device that allows detection of all angles possible to move around an axis generally perpendicular to the lid in a pure "analog" fashion by a touch screen display and in the preferred embodiment also the magnitude of the radial movement from the axis. The device is furthermore cheap to manufacture, does not include any electrical components or other types of expensive devices. Another advantage is that it makes use of a touch screen, which is already provided, in the portable electronic device.

The change to software in the phone for detecting movement inputs is also not hard to make, which makes the present invention even more attractive.

## Claims

1. Movement input device for use on a touch screen (14) of a portable electronic device (10) comprising a fastening until (16) for securing the movement input device on the portable electronic device (10) and having a top and bottom side, said unit also being arranged for being placed over at least parts of the touch screen (14), and a user input unit (18) fastened in and stretching through the fastening unit (16), wherein the user input unit (18) comprises:
a user actuation part (26) protruding from the top side of the fastening unit (16) and being possible to actuate by a user for free angular movement with an angle of rotation around an axis (X) provided at least generally perpendicular to the top and bottom sides of the fastening unit (16), and
a touch screen contact part (28; 36) protruding from the bottom side of the fastening unit (16), which, when the device is placed for use on the touch screen (14) and upon actuation by the user of the user actuation part (26), is arranged to contact the touch screen (14) in a position where at least an angle of the contact position corresponds to the angle of the user actuation part, so that movement of the user input unit (18) is detected on the touch screen (14)
being **characterised in that** the user actuation part (26) and the touch screen contact part (28; 36) are joined together by a fastening part (30) being fastened in the fastening unit (16) while still allowing free movement round said axis (X).

2. Movement input device according to claim 1, wherein the touch screen contact part (28; 36) comprises a pin (34) for direct contact on the screen (14) so that a radial movement of the touch screen contact part (28; 36) from the axis (X) corresponds to a radial movement of the user actuation part (26).

3. Movement input device according to claim 2, wherein the touch screen contact part also comprises a spring (32) arranged to force the pin in contact with the touch screen.

4. Movement input device according to claim 1, wherein the touch screen contact part (28; 36) comprises a disc having a rim, which contacts the screen (14) at a fixed distance from the axis of the screen (14) upon actuation of the user actuation part (26).

5. User input device according to claim 4, wherein the disc has parabolic shape.

6. Portable electronic device (10) comprising:
a body comprising : a touch screen (14) for detecting inputs from a user on said screen (14), and
a movement input device according to claim 1.

7. Portable electronic device (10) according to claim 6, further including an input determination unit (40) for determining positions of input from a user.

8. Portable electronic device (10) according to claim 6 or 7, wherein the fastening unit (16) is rotatably connected to the body.

9. Portable electronic device (10) according to claim 8, wherein the body further comprises a fastening unit sensing device arranged to sense if the fastening unit (16) is in position for providing inputs from the movement input device on the touch screen (14).

10. Portable electronic device (10) according to any of claims 6-9, wherein the device (10) is a mobile phone.

## Patentansprüche

1. Bewegungseingabegerät zur Verwendung auf einem Berührungsbildschirm (14) eines tragbaren elektronischen Geräts (10), welches aufweist:
eine Befestigungseinheit (16) mit einer Ober- und einer Unterseite zur Befestigung des Bewegungseingabegeräts auf dem tragbaren elektronischen Gerät (10), wobei die Einheit auch mindestens über Teile des Berührungsbildschirms (14) angeordnet werden kann, sowie eine Nutzereingabeeinheit (18), die in der Befestigungseinheit (16) befestigt ist und sich durch sie erstreckt, wobei die Nutzereingabeeinheit (18) aufweist:
ein Nutzerbedienteil (26), das aus der Oberseite der Befestigungseinheit (16) herausragt und von einem Nutzer unbeschränkt winkelförmig in einem Drehwinkel um eine Achse (X) bewegt werden kann, die mindestens allgemein senkrecht zur Ober- und Unterseite der Befestigungseinheit (16) steht, und
ein Berührungsbildschirm-Kontaktteil (28; 36), das aus der Unterseite der Befestigungseinheit (16) herausragt und, wenn das Gerät zur Verwendung auf dem Berührungsbildschirm (14) angeordnet ist und der Nutzer das Nutzerbedienteil (26) betätigt, den Berührungsbildschirm (14) in einer Position berühren kann, in der mindestens ein Winkel der Berührungsposition dem Winkel des Nutzerbedienteils entspricht, so dass die Bewegung der Nutzereingabeeinheit (18) auf den Berührungsbildschirm (14) übertragen wird,
**dadurch gekennzeichnet, dass**
Nutzerbedienteil (26) und Berührungsbildschirm-Kontaktteil (28; 36) über eine in der Befestigungseinheit (16) befestigte Halterung (30) miteinander verbunden sind, wobei eine ungehinderte Bewegung um die Achse (X) immer noch möglich ist.

2. Bewegungseingabegerät nach Anspruch 1, wobei das Berührungsbildschirm-Kontaktteil (28; 36) einen Stift (34) aufweist, der den Bildschirm (14) direkt berührt, so dass eine radiale Bewegung des Berührungsbildschirm-Kontaktteils (28; 36) von der Achse (X) einer radialen Bewegung des Nutzerbedienteils (26) entspricht.

3. Bewegungseingabegerät nach Anspruch 2, wobei das Berührungsbildschirm-Kontaktteil (28; 36) auch eine Feder (32) aufweist, welche den Stift in Kontakt mit dem Berührungsbildschirm hält.

4. Bewegungseingabegerät nach Anspruch 1, wobei das Berührungsbildschirm-Kontaktteil (28; 36) eine Scheibe aufweist, deren Rand den Bildschirm (14) bei Betätigung des Nutzerbedienteils (26) in einem bestimmten Abstand von der Achse des Bildschirms (14) berührt.

5. Bewegungseingabegerät nach Anspruch 4, wobei die Scheibe eine parabolische Form hat.

6. Tragbares elektronisches Gerät (10), welches aufweist:
ein Hauptteil mit einem Berührungsbildschirm (14) zur Erfassung von darauf erfolgten Eingaben eines Nutzers, und
ein Bewegungseingabegerät nach Anspruch 1.

7. Tragbares elektronisches Gerät (10) nach Anspruch 6, welches weiterhin eine Eingabeermittlungseinheit (40) zur Ermittlung der Positionen der Eingaben eines Nutzers aufweist.

8. Tragbares elektronisches Gerät (10) nach Anspruch 6 oder 7, wobei die Befestigungseinheit (16) drehbar mit dem Hauptteil verbunden ist.

9. Tragbares elektronisches Gerät (10) nach Anspruch 8, wobei das Hauptteil weiterhin einen Befestigungseinheitssensor aufweist, der erfassen kann, ob die Befestigungseinheit (16) so angeordnet ist, dass sie Eingaben vom Bewegungseingabegerät auf den Berührungsbildschirm (14) übertragen kann.

10. Tragbares elektronisches Gerät (10) nach einem der Ansprüche 6 - 9, wobei das Gerät (10) ein Mobiltelefon ist.

## Revendications

1. Dispositif d'entrée de mouvement destiné à être utilisé sur un écran tactile (14) d'un dispositif électronique portable (10), comportant :
une unité de fixation (16) destinée à assujettir le dispositif d'entrée de mouvement sur le dispositif électronique portable (10) et ayant un côté de dessus et un côté de dessous, ladite unité étant également agencée de façon à être placée sur au moins des parties de l'écran tactile (14), et une unité (18) d'entrée pour l'utilisateur fixée dans et s'étirant à travers l'unité de fixation (16), dans lequel l'unité (18) d'entrée pour l'utilisateur comporte :
une partie (26) d'actionnement par l'utilisateur faisant saillie du côté de dessus de l'unité (16) de fixation et pouvant être actionnée par un utilisateur pour un mouvement angulaire libre avec un angle de rotation autour d'un axe (X) prévu au moins à peu près perpendiculairement aux côtés de dessus et de dessous de l'unité de fixation (16), et
une partie (28 ; 36) de contact de l'écran tactile faisant saillie du côté de dessous de l'unité de fixation (16), qui, lorsque le dispositif est placé pour une utilisation sur l'écran tactile (14) et lors d'un actionnement par l'utilisateur de la partie (26) d'actionnement par l'utilisateur, est agencée pour entrer en contact avec l'écran tactile (14) dans une position où au moins un angle de la position de contact correspond à l'angle de la partie d'actionnement par l'utilisateur, afin qu'un mouvement de l'unité (18) d'entrée par l'utilisateur soit détecté sur l'écran tactile (14),
**caractérisé en ce que** la partie (26) d'actionnement par l'utilisateur et la partie (28 ; 36) de contact avec l'écran tactile sont joints l'une à l'autre par une partie de fixation (30) qui est fixée dans l'unité de fixation (36) tout en permettant encore un mouvement libre autour dudit axe (X).

2. Dispositif d'entrée de mouvement selon la revendication 1, dans lequel la partie (28 ; 36) de contact avec l'écran tactile comporte un ergot (34) destiné à un contact direct avec l'écran (14) afin qu'un mouvement radial de la partie (28 ; 36) de contact avec l'écran tactile à partir de l'axe (X) corresponde à un mouvement radial de la partie (26) d'actionnement par l'utilisateur.

3. Dispositif d'entrée de mouvement selon la revendication 2, dans lequel la partie de contact avec l'écran tactile comporte un ressort (32) agencé pour appliquer à force l'ergot en contact avec l'écran tactile.

4. Dispositif d'entrée de mouvement selon la revendication 1, dans lequel la partie (28 ; 36) de contact avec l'écran tactile comporte un disque ayant un rebord, qui entre en contact avec l'écran (14) à une distance fixe de l'axe de l'écran (14) lors d'un actionnement de la partie (26) d'actionnement par l'utilisateur.

5. Dispositif d'entrée par l'utilisateur selon la revendication 4, dans lequel le disque a une forme parabolique.

6. Dispositif électronique portable (10) comportant :
un corps comportant : un écran tactile (14) destiné à détecter des entrées provenant d'un utilisateur sur ledit écran (14), et
un dispositif d'entrée de mouvement selon la revendication 1.

7. Dispositif électronique portable (10) selon la revendication 6, comprenant en outre une unité (40) de détermination d'entrée destinée à déterminer des positions d'une entrée provenant d'un utilisateur.

8. Dispositif électronique portable (10) selon la revendication 6 ou 7, dans lequel l'unité de fixation (16) est reliée de façon à pouvoir tourner au corps.

9. Dispositif électronique portable (10) selon la revendication 8, dans lequel le corps comporte en outre un dispositif de détection d'unité de fixation agencé pour détecter si l'unité de fixation (16) est dans une position pour produire des entrées à partir du dispositif d'entrée de mouvement sur l'écran tactile (14).

10. Dispositif électronique portable (10) selon l'une des revendications 6 à 9, dans lequel le dispositif (10) est un téléphone mobile.
